# EUROPEAN PATENT SPECIFICATION

(11) **EP 0 488 668 B1**
(45) Date of publication and mention of the grant of the patent: **23.04.1997**
(21) Application number: 91310908.8
(22) Date of filing: 27.11.1991
(51) Int. Cl.: A01N 25/16, A01N 25/06

(54) **Foam-forming herbicidal composition and method of application**
Schaumbildende herbizide Zusammensetzung und Verfahren zur Applikation
Composition herbicide moussante et procédé pour l'application

(30) Priority: 28.11.1990 JP 322601/90; 01.11.1991 JP 313116/91
(43) Date of publication of application: 03.06.1992
(73) Proprietor: FUMAKILLA LIMITED, Tokyo (JP); MEIJI SEIKA KAISHA LTD., Chuo-ku Tokyo (JP)
(72) Inventor: Sakamoto, Naoki, Saeki-gun, Hiroshima-ken (JP); Sudo, Osamu, Hatsukaichi-shi, Hiroshima-ken (JP); Shomura, Tomoko, Yokohama-shi, Kanagawa-ken (JP); Inoue, Youko, Fujisawa-shi, Kanagawa-ken (JP)
(74) Representative: Gaunt, Robert John

(56) References cited:
- DE-A- 3 002 053
- FR-A- 1 272 551
- US-A- 3 689 245
- US-A- 3 692 512
- US-A- 4 975 425
- CHEMICAL ABSTRACTS, vol. 113, no. 13, 24 September 1990, Columbus, OH (US); N. UCHIDA, p. 601, no. 114306m
- CHEMICAL ABSTRACTS, vol. 81, no. 14, 07 October 1974, Columbus, OH (US); Y. OHNO et al., p. 293, no. 82248w
- CHEMICAL ABSTRACTS, vol. 114, no. 15, 15 April 1991, Columbus, OH (US); H. MURAKAMI, no. 142217x
- CHEMICAL PATENTS INDEX, BASIC ABSTRACTS JOURNAL, Section Ch, Week 9012, Derwent Publications Ltd., London (GB); Class C, AN 088572/12

## Description

The present invention relates to a herbicidal composition which can be applied in the form of an emulsion foam having fine bubbles and fluidity.

Conventional herbicides may be classified into solid- and liquid-formulations. Each type has both advantages and disadvantages. Granules, powders, plates, sticks are applied in the former style. Water soluble powders, emulsifiable concentrates, wettable powders, concentrated solutions, flowable formulations and AL-agents (already diluted to a concentration suitable for use) are applied in the latter formulations. Aerosol herbicidal compositions have also been developed. For example, a liquid herbicidal composition comprising a certain organic herbicide and a propellant is described in Japanese Patent Public Disclosure No. 49 - 101539.

As described above, all conventional solid and liquid herbicidal compositions such as granules, powders, plates, sticks, aqueous solutions, emulsions, hydrates, solutions, flowable agents and AL-agents, have both advantages and disadvantages as will be explained below.

Solid herbicidal compositions, which can be applied without dilution or other preparation, are easy to use. Dosage, however, is not always clear because of the difficulty in providing exact measurements in small-scale operations such as in domestic use. It is also difficult to scatter a solid herbicide uniformly.

Most liquid herbicides have the advantage that they can be sprinkled uniformly with a watering can. They are prepared in concentrated form and must be diluted before use. This dilution sometimes causes the dosage to be unexact and prevents proper application in small-scale operations such as in domestic use. Also, it is necessary to rinse out the apparatus or containers after use. Liquid herbicides used for the treatment of stems and leaves have another disadvantage in that a large portion of the sprinkled solution flows down to the ground resulting in a great waste of the active agent.

Aerosols are very convenient and require no dilution or rinsing. A large portion of sprayed aerosol, however, flows down to the ground also resulting in a great waste of the active agent. This fact also causes difficulty in visually determining which areas have been treated. Since sprayed particles are small and easily scattered, valuable plants may be damaged and humans and animals, especially the user may be exposed to harmful inhalation of the active ingredients of the herbicide.

Thus a proper form of administration of herbicides has been desired for small-scale operations such as in domestic use.

Therefore an object of the present invention is to provide a foam-forming herbicidal composition which overcomes the above-mentioned drawbacks and which has the advantage that already-treated areas can easily be visually distinguished from untreated parts, and to provide a method of application.

Another object of the present invention is to provide a foam-forming herbicidal composition which can readily be utilized efficiently and safely. In accordance with the present invention, a herbicidal foam composition comprises, on the basis of the total weight of the composition,
(a) about 0,05 to 20% of a herbicide selected from the group consisting of Bialaphos, Glufosinate, Glyphosate and a mixture thereof,
(b) about 0.1 to 10% of an anionic surfactant selected from the group consisting of alkylsulfosuccinate alkaline salts, polyoxyethylenealkylsulfate alkaline salts and a mixture thereof,
(c) up to 10% of a glycol ether,
(d) water as a diluent and
(e) up to about 50% of liquefied petroleum gas as a propellant.

Compositions of the present inventions exhibit both advantages of solid and liquid preparations due to the hardness or viscosity of foam, and overcome the problems of aerosol preparations. Since the present compositions are capable of being formed into a foam having fine bubbles and fluidity in use, it is easy to determine which areas have been treated.

The water-soluble herbicides used in the present invention are selected from the group consisting of Bialaphos, Glufosinate, Glyphosate and a mixture thereof.

These are herbicides which are sprinkled on to stems and leaves, rather than being applied on to soil.

Each of the herbicides mentioned above can be used alone or in combination. The concentration of each herbicide should be within the range of 0.05 - 20 wt.%, preferably 0.1 - 10 wt.% of the whole composition. Compositions having a concentration lower than 0.05 wt.% exhibit incomplete herbicidal effects as shown in the examples described below, while those having a concentration higher than 20 wt.% adversely affect the formation of foam.

Surfactants for foaming are generally classified into cationic, anionic, nonionic and amphoteric surfactants. Anionic surfactants are used in the present invention, namely alkylsulfosuccinate alkaline salts (such as dioctyl sulfosuccinate) and polyoxyethylenealkylsulfate alkaline salts (such as sodium-polyoxyethylenealkylsulfate), and a mixture thereof. The concentration of surfactants should be in the range of 0.1 - 10 wt.%. Compositions having a surfactant concentration lower than 0.1 wt.% do not easily form foam as shown in the examples described below, while compositions having a surfactant concentration higher than 20 wt.% remain in soil and adversely affect the valuable plants which are to be cultivated after use.

The diluent used to dissolve or suspend said herbicides and surfactants is water.

A method which takes advantage of aerosol application and a method in which a sprayer apparatus is utilized are exemplified for foaming.

In the case of using an aerosol, a herbicidal solution comprising said herbicides, surfactants and diluent is enclosed in an aerosol container having a spraying device together with a propellant. The solution can easily be applied by pushing the button of the spraying apparatus. The propellant comprises oil-soluble liquefied petroleum gas, this being a nonpolar propellant gas. Such formulations are called post-foaming since they produce stable foam after it clings to the target. The desirable concentration of propellant is no more than 50 wt.%, preferably 5 - 15 wt.% of the whole composition.

A spraying apparatus can be used to generate foam. In this case, a herbicidal solution is placed in a container equipped with a pressurizer such as a trigger-type sprayer, a manual pump and an electric pump, and is applied. The advantage using a spraying apparatus is that the extent of mixing air with a herbicide solution can be adjusted to a desired level by handling the spraying mechanism to make a favorable foam easily. As far as foam is built up, any pressurizer can be used, for example a manual pump, an electric pump, a spraying device using compressed gases, a container with a device which can generate foam, etc.

Herbicidal compositions according to the present invention can also be applied by either Excell and Enviro systems. The Excell system takes advantage of a contracting property of an elastic material explained as follows: Flexible bags set inside a tubular material which can expand substantially in the radius direction, are pressure-packed with a flowing product to make the tubular material expand. When contraction of the tubular material occurs, the inside flowing product is forced out. For details, see Japanese Patent Public disclosure No. 61-118163, Japanese Patent Publication No. 01-25626 (International Publication W082/00780), and Japanese Patent Publication No. 02-60586 (International Publication W082/02034).

The Enviro system utilizes gas generation through a chemical reaction. Expandable pressure bags containing chemical reagents which generate gases in reactions, are placed in a container, which is divided into a product-involving area packed with a flowing product and a gas-generating area having several compartments. Chemicals such as an aqueous solution of sodium bicarbonate and citric acid solution placed in each compartment, start to react and generate gas (carbon dioxide gas in the above-mentioned case)in turn to make the flowing product gush out by the pressure of the generated gas. Details are seen in Japanese Patent Public disclosure No. 64-84878, Japanese Patent Publication No. 01-111468 and Japanese Patent Publication No. 02-8780. Herbicidal compositions of the present invention can be applied in the form of foam by the Excell or Enviro system.

These systems, however, can merely spray a flowing product and have no foaming ability. Therefore it is necessary to add a low-boiling solvent having a boiling point of no higher than 20°C, such as n-pentane, n-butane, iso-pentane, Freon 113, isoprene, cyclopentane, and 2,2-dimethylpropane to the herbicidal composition by 1.0 - 20 wt.%, preferably 5 - 10 wt.% of the whole composition. Compositions having a concentration of low-boiling solvent lower than 1.0 wt.% can not be sprayed to make a foam, while those of a concentration higher than 20 wt.% prevent the formation of a favored foam. Therefore when the Excell or Enviro system is utilized, it is preferred that surfactants in an amount of 0.1 - 10 wt.% and a low-boiling solvent in an amount of 1.0 - 20 wt.% on the basis of the weight of the whole composition are added to the herbicide-containing solution.

Addition of the above-mentioned low-boiling solvents shows good foaming even in preparations other than the Excell- and Enviro system. The concentration of the solvent added can be no higher than 1.0 wt.% in this case.

Herbicidal compositions according to the present invention can include a suspending agent such as carboxymethyl cellulose and ethylene glycol; an antifreezing agent such as ethylene glycol, ethyl cellosolve, butyl carbitol and 3-methyl-3-methoxybutanol; and antiseptic agents such as p-hydroxy butylbenzoate to stabilize the active ingredients, and a rust preventive such as amino alcohol and morpholine to prevent the container from corroding. The addition of anionic surfactants such as monoglyceride and natural saponin exhibits good results on foaming. To stabilize the form and maintain the excellent conditions of the texture, fatty acid amides, sulfate of Group VIII metals, sugars such as solbitol and glucose, polyethylene glycols, animal or vegetable oils such as oleic acid, soy bean oil and beef tallow, and kerosene can be added to the herbicidal composition. Addition of these stabilizers enables the formation of foam of an appropriate hardness (viscosity).

Herbicidal compositions according to the present invention can include a spreader such as surfactants, glycol ethers, sugars, casein, lime, paraffin and vegetable fibers to enable the herbicide stick to weeds and can also include colors or flavors to clearly make a visual discrimination of already-treated parts from untreated parts.

### Examples:

The following examples will illustrate the present invention. It is to be understood that the invention is not limited to these examples.

The chemical names of compounds used in the examples and Tables are as follows:

| COMMON NAME | CHEMICAL NAME |
|---|---|
| Bialaphos: | L-2-amino-4-[(hydroxy)(methyl)-phosphinol}-butyryl-L-alanyl-L-alanin sodium salt. |
| Glufosinate: | ammonium-DL-homoalanin-4-yl(methyl) phosphinate. |
| Glyphosate: | isopropylamine salt of N-(phosphonomethyl)-glicine. |

### Examples 1 - 6

The Examples are preparations of herbicidal compositions applied by an aerosol container.

Various herbicides, surfactants and propellants were compounded according to the chemical compositions shown in Table 1. A herbicide and a surfactant were mixed to give a homogeneous solution or a suspension followed by adding of other components such as an anti-freeze and a stabilizer. The mixture became a uniform liquid or a suspension. A diluent (water) was added thereto to obtain a uniform emulsion or a suspension. The resultant mixture was pressure-packed in an aerosol can together with a propellant to prepare a foam-forming aerosol herbicidal composition.

Each aerosol herbicide prepared through the same procedure as described above was examined to determine its foaming condition and herbicidal effect. The foam was judged by the retention times of foam structures after spraying onto a floor having a size of 1 x 1 m for five seconds (equivalent to about 20 g). The results were scored as follows:
- ⓞ: foam retention time > 5 min. (excellent)
- o: 2 - 5 min. (fair)
- △: 1 - 2 min. (not good)
- X: 0 - 1 min. (bad)

Herbicidal effects were judged by the vegetation rates (fraction of covered ground with weeds) at the fourth week after the herbicidal formulations were applied onto the ground having a size of 1 × 1 m for five seconds (equivalent to about 20 g). The results were scored as follows:
- ⓞ: vegetation rate < 20%. (excellent)
- o: 20 - 40%. (fair)
- △: 40 - 60%. (not good)
- X: > 60%. (bad)

The results are shown in Table 1.
(A) Examples 1 - 6 in Table 1 shows effects of stabilizers included in herbicide preparations. Mixing a stabilizer enables the formation of good foam.

An aerosol container was equipped onto an automatic aerosol sprayer(manufactured by Yamada Seiki Seisakusho). The herbicidal composition was sprayed downward from the apparatus toward a 50 x 50 cm test paper fixed with four-corner-tacks on a 50 x 50 cm wood frame laid on the floor. The distance between the sprayer and the target was vertically 20 cm. The spraying duration was 1 sec. The difference between the initial and the final weight of the container was determined and was taken in the calculation of the theoretical deposited amount (sprayed amount × active agent concentration). Then the deposit rate (observed value/theoretical value x 100) was computed out.

Too high a concentration of surfactant made the foam hard and spraying condition unsatisfactory. Therefore the appropriate concentration of surfactant seems to be 0.1 - 20%.

### Advantages of the Invention

As stated above, herbicidal compositions in accordance with the present invention can be formed into foam possessing the merits of solid and liquid agents. The present invention therefore provides the following advantages:
(a) In the case of using herbicides for stems and leaves, compositions of the present invention easily deposit on weeds thus increasing the herbicidal action.
(b) In the case of using herbicides for stems and leaves, the application of a herbicidal composition can be visually confirmed, thus preventing excess application.
(c) In the case of using herbicides for stems and leaves, foam gradually decends along the surface of leaves to which a herbicidal composition has been applied, thereby enabling uniform application of the agent over the weed.
(d) Compositions of the present invention are safer to use due to reduced scattering or drifting.
(e) The present invention does not result in an unsightly appearance since the foam gradually disappear.
(f) Compositions of the present invention can be formed into an aerosol formulation and easily used with a spraying apparatus.
(g) Addition of a low-boiling solvent to herbicidal compositions in accordance with the present invention provides a composition of a herbicidal formulation that is capable of being formed, with Enviro System or Excell System, into a stable foam.
(h) Additional agents such as fragrances, insecticides, germicides and agents for controlling the growth of plants can be incorporated into herbicidal compositions in accordance with the present invention, thereby the action of these additional agents can be utilized.

**Table 1**

| composition | | Example No. | | | | | |
|---|---|---|---|---|---|---|---|
| ingredient | | 1 | 2 | 3 | 4 | 5 | 6 |
| bialaphos | herbicide | 3 | 3 | 3 | 3 | 3 | 3 |
| potassiumpolyoxyethylene alkyl sulfate | anionic surfactant | 3 | 3 | 3 | 3 | 3 | 3 |
| polyoxyethylene sorbitan monolaurate | nonionic surfactant | - | - | - | - | - | - |
| ethylene glycol | stabilizer | - | - | - | - | - | - |
| diethylene glycol | stabilizer | - | - | - | - | - | - |
| triethylene glycol | stabilizer | - | - | - | - | - | - |
| propylene glycol | stabilizer | - | - | - | - | - | - |
| glycerine | stabilizer | - | - | - | - | - | - |
| ethylene glycol monoethyl ether | stabilizer | 5 | - | - | - | - | - |
| ethylene glycol monobutyl ether | stabilizer | - | 5 | - | - | - | - |
| diethylene glycol monomethyl ether | stabilizer | - | - | 5 | - | - | - |
| diethylene glycol monoethyl ether | stabilizer | - | - | - | 5 | - | - |
| diethylene glycol monoisopropyl ether | stabilizer | - | - | - | - | 5 | - |
| diethylene glycol monobutyl ether | stabilizer | - | - | - | - | - | 5 |
| liquefied petroleum gas | propellant | 11 | | | | | |
| water (ion-exchanged water) | diluent | remainder | | | | | |
| total | | 100 | | | | | |
| condition of foam (Note 1) | | ⓞ | ⓞ | ⓞ | ⓞ | ⓞ | ⓞ |
| herbicidal effect (Note 2) | | ⓞ | ⓞ | ⓞ | ⓞ | ⓞ | ⓞ |
| Note 1) condition of foam ⓞ: excellent Note 2) herbicidal effect ⓞ: excellent | | | | | | | |

## Claims

1. A herbicidal foam composition comprising, on the basis of the total weight of the composition,
(a) 0.05 to 20% of a herbicide selected from the group consisting of Bialaphos, Glufosinate, Glyphosate and a mixture thereof,
(b) 0.1 to 10% of an anionic surfactant selected from the group consisting of alkylsulfosuccinate alkaline salts, polyoxyethylenealkylsulfate alkaline salts and a mixture thereof,
(c) up to 10% of a glycol ether,
(d) water as a diluent and
(e) up to 50% of liquefied petroleum gas as a propellant.

2. The composition of claim 1 wherein said glycol ether is selected from the group consisting of ethylene glycol monoethyl ether, ethylene glycol monobutyl ether, diethylene glycol monomethyl ether, diethylene glycol monoethyl ether, diethylene glycol monoisopropyl ether and diethylene glycol monobutyl ether.

3. The composition of any of claims 1 and 2 further comprising one or more stabilizing agents, spreading agents, thickeners, pastes, coloring agents, insecticides, germicides, fragrant agents or fertilizers.

4. The composition of any of claims 1 to 3 further comprising at least one low-boiling solvent in an amount of 0.1 to 20% by weight based on the weight of the composition.

## Patentansprüche

1. Herbizidschaum-Zusammensetzung, die, bezogen auf das Gesamtgewicht der Zusammensetzung, umfaßt:
(a) 0,05 bis 20 % eines Herbizids, ausgewählt aus der Gruppe, bestehend aus Bialaphos, Glufosinat, Glyphosat und einer Mischung davon,
(b) 0,1 bis 10 % eines anionischen Tensids, ausgewählt aus der Gruppe, bestehend aus alkalischen Alkylsulfosuccinatsalzen, alkalischen Polyoxyethylenalkylsulfatsalzen und einer Mischung davon,
(c) bis zu 10 % eines Glykolethers,
(d) Wasser als Verdünnungsmittel, und
(e) bis zu 50 % eines verflüssigten Petroleumgases als Treibmittel.

2. Zusammensetzung gemäß Anspruch 1, worin besagter Glykolether ausgewählt wird aus der Gruppe, bestehend
aus Ethylenglykolmonoethylether,
Ethylenglykolmonobutylether,
Diethylenglykolmonomethylether,
Diethylenglykolmonoethylether,
Diethylenglykolmonoisopropylether und
Diethylenglykolmonobutylether.

3. Zusammensetzung gemäß einem der Ansprüche 1 und 2, die ferner ein oder mehrere Stabilisatormittel, Streumittel, Verdicker, Pasten, Färbemittel, Isektizide, keimtötende Mittel, Duftstoffe oder Düngemittel umfaßt.

4. Zusammensetzung gemäß einem der Ansprüche 1 bis 3, die ferner mindestens ein niedersiedendes Lösungsmittel in einer Menge von 0,1 bis 20 Gew.-%, bezogen auf das Gewicht der Zusammensetzung umfaßt.

## Revendications

1. Composition herbicide moussante comprenant, relativement au poids total de la composition,
(a) 0,05 à 20 % d'un herbicide choisi parmi le Bialaphos, le Glufosinate, le Glyphosate et un de leurs mélanges,
(b) 0,1 à 10 % d'un agent tensioactif anionique choisi parmi les sels alcalins d'alkylsulfosuccinate, les sels alcalins de polyoxyéthylène-alkylsulfate et un de leurs mélanges,
(c) jusqu'à 10 % d'un éther de glycol,
(d) de l'eau en tant que diluant et
(e) jusqu'à 50 % d'un gaz de pétrole liquéfié en tant que propulseur.

2. Composition selon la revendication 1, où ledit éther de glycol est choisi parmi l'éther monoéthylique de l'éthylèneglycol, l'éther monobutylique de l'éthylèneglycol, l'éther monométhylique du diéthylèneglycol, l'éther monoéthylique du diéthylèneglycol, l'éther monoisopropylique du diéthylèneglycol et l'éther monobutylique du diéthylèneglycol.

3. Composition selon l'une des revendications 1 et 2, comprenant de plus un ou plusieurs agents stabilisants, agents d'épandage, épaississants, pâtes, agents colorants, insecticides, germicides, agents odorants ou fertilisants.

4. Composition selon l'une quelconque des revendications 1 à 3, comprenant de plus au moins un solvant à bas point d'ébullition en une proportion de 0,1 à 20 % en poids relativement au poids de la composition.
